# EUROPEAN PATENT SPECIFICATION

(11) **EP 3 219 991 B1**
(45) Date of publication and mention of the grant of the patent: **04.01.2023**
(21) Application number: 17161095.9
(22) Date of filing: 15.03.2017
(51) Int. Cl.: F04D 17/16, F04D 25/06, F04D 25/08, F04D 29/62

(54) **ALIGNING A CENTERLINE OF A MOTOR SHAFT IN A FAN ASSEMBLY**
AUSRICHTUNG EINER MITTELLINIE EINER MOTORWELLE IN EINER GEBLÄSEBAUGRUPPE
ALIGNEMENT D'UNE LIGNE CENTRALE D'UN ARBRE DE MOTEUR DANS UN ENSEMBLE VENTILATEUR

(30) Priority: 15.03.2016 US 201662308668 P
(43) Date of publication of application: 20.09.2017
(73) Proprietor: Trane International Inc., Davidson, NC 28036 (US)
(72) Inventor: SULLIVAN, Ryan, La Crosse, WI Wisconsin 54601 (US); ORR, Joseph R, La Crosse, WI Wisconsin 54601 (US); LONG, Brian F, Lexington, KY Kentucky 40511 (US); NIBLICK, Daniel T, Lexington, KY Kentucky 40511 (US)
(74) Representative: Haseltine Lake Kempner LLP

(56) References cited:
- CN-U- 202 946 455
- US-A1- 2015 267 713
- US-B1- 6 450 782

## Description

### FIELD

This disclosure relates generally to a fan assembly. More specifically, this disclosure relates to aligning a centerline of a motor shaft in a direct drive fan assembly.

### BACKGROUND

A direct drive fan assembly has the motor directly driving a fan wheel and does not use belts and/or sheaves to drive the fan wheels. Direct drive fans may require a special type of motor that provides high torque at a low speed rpm. However, the motor for a direct drive fan assembly may be physically larger than a motor running at a faster rpm. That is, a direct drive fan assembly may have a large motor that runs slowly.

Direct drive fan assemblies may be complex with many different parts and/or parts with multiple attachment points (e.g., holes), which have many different variations to accommodate for changing the components of the direct drive fan assembly. Many different parts and attachment points can be combined to make many different variations for each part.

CN 202 946 455 describes a blower framework, which is used for setting a blower set comprising a motor and fan blades. The blower framework comprises a frame body and a load bearing part. A plurality of fixed connection parts are arranged inside the frame body. The load bearing part is detachably arranged inside the frame body, used for bearing the blower set, and provided with a bearing part, a support part, a plurality of first connecting parts as well as a second connecting part. The support part is located on one side of the bearing part. The plurality of first connecting parts are located at two ends of the bearing part, and one end, not connected with the bearing part, of the support part, respectively. The first connecting parts correspond to the plurality of fixed connection parts, respectively.

### SUMMARY

The invention is defined in the attached independent claims to which reference should now be made. Further, optional features may be found in the sub-claims appended thereto.

This disclosure relates generally to a fan assembly. More specifically, this disclosure relates to aligning a centerline of a motor shaft in a direct drive fan assembly.

As different motors are changed within the direct drive fan assembly, the various motors may have different motor heights and the motor shaft may not properly align with a hub in the direct drive fan assembly. When the motor shaft does not align in the direct drive fan assembly, more components may need to be changed to accommodate the changed motor so as to properly align the motor shaft. This may cause more parts to be combined and/or changed throughout the direct drive fan assembly in order to correct alignment.

According to an aspect there is described a method for aligning a centerline of a motor shaft in a direct drive fan assembly according to claim 1.

According to a further aspect there is described a method for minimizing components in a direct drive fan assembly according to claim 5.

According to another aspect there is described a direct drive fan assembly according to claim 7.

### BRIEF DESCRIPTION OF THE DRAWINGS

Reference is now made to the drawings in which like reference numbers represent corresponding parts throughout.
Fig. 1 illustrates a direct drive fan assembly with a motor-plate assembly, according to the invention.
Figs. 2A and 2B illustrate different configurations of motor-plate assemblies.
Figs. 3A - 3E illustrate a plurality of configurations of motors-plate assemblies.
Fig. 4A illustrates a direct drive fan assembly frame according to the invention.
Figs. 4B - 4E illustrate a plurality of configurations of motors-plate assemblies according to the invention.
Fig. 4F illustrates notches in the motor supports of the direct drive fan assembly according to the invention.
Fig. 5A illustrates a direct drive fan assembly frame.
Figs. 5B - 5E illustrate another configuration of a plurality of configurations of motors-plate assemblies.
Fig. 6 illustrates a method flowchart which is not according to the claimed invention.

### DETAILED DESCRIPTION

A direct drive fan assembly has the motor directly driving a fan wheel and does not use belts and/or sheaves to drive the fan wheels. Direct drive fans may require a special type of motor that provides high torque at a low speed rpm. However, a motor for a direct drive fan assembly that operates at a lower rpm may be physically larger than a motor that normally operates at a faster rpm.

As different motors are changed within the direct drive fan assembly, the various motors may differ in height, which may not properly align the motor shaft in the direct drive fan assembly. When the motor shaft does not align in the direct drive fan assembly, more components need to be changed to accommodate for the changed motor so as to properly align the motor shaft. This may cause more parts to be combined and/or changed throughout the direct drive fan assembly in order to correct alignment.

As a result, direct drive fan assemblies may be complex with many different parts and/or parts with multiple attachment points to provide many different variations. For example, some parts may have a plurality of holes to enable parts to be installed in many different locations upon the assembly, which creates many different variations for each part. Many parts can cause complications when assembling a direct drive fan assemblies due to the combination of a large number of part types and multiple set of holes. The assembly can be further complicated when the fans are assembled incorrectly (e.g., incorrect part and/or hole attachments), which may force a rework of the fan and/or reassembly.

As disclosed herein, a method for aligning a centerline of a motor shaft in a direct drive fan assembly while minimizing components is described. Aligning the centerline of the motor shaft in the direct drive fan assembly includes changing only a motor and a corresponding motor-plate in the direct drive fan assembly, thereby reducing the number of components that are changed and/or replaced in the direct drive fan assembly. That is, the arrangement of the hub and the frame of the direct drive fan assembly and their sizing can remain unchanged, while a sizing of a motor and/or motor plate are changed. The motor and the motor plates can be reused and/or combined in various assemblies to fit a single fan assembly frame and/or fan.

By limiting the number of components (e.g., the motor and the motor-plate) that are changed in the direct drive fan assembly, changing motors in the direct drive fan assembly can be more efficient, less complex, and fewer parts may be manufactured which can lead to cost savings.

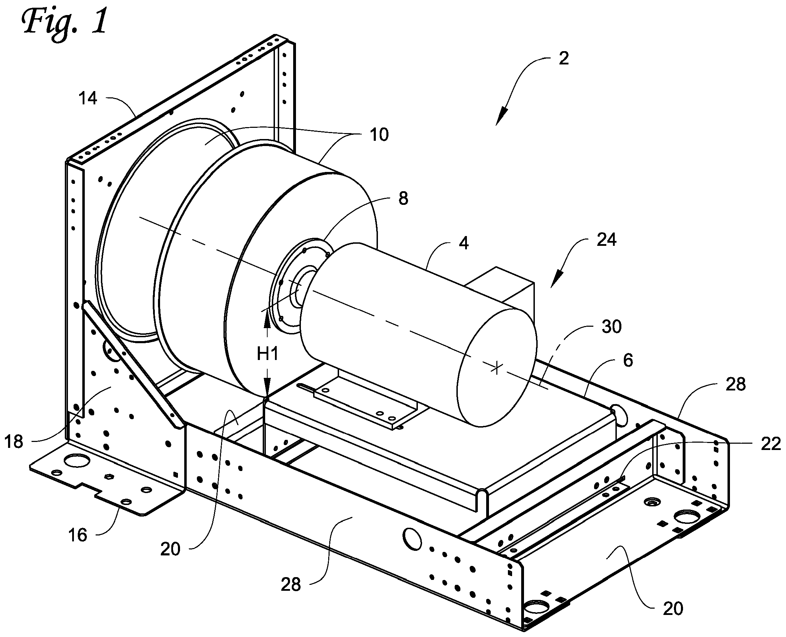

Fig. 1 illustrates a direct drive fan assembly 2 with a motor-plate assembly, according to an embodiment of the invention.

The direct drive fan assembly 2 includes isolator brackets 16, gussets 18, a motor supports 20, two rails 28, an inlet plate 14, a fan 10, and a hub 8, which form a fan assembly base. One end of isolator brackets 16 is connected to a side of the gussets 18 and other end of the isolator bracket 16 is connected to the inlet plate 14. The gussets 18 are also connected to the inlet plate 14. The inlet plate 14 is connected to a first end of the fan 10, while a second end of the fan 10 is connected to the hub 8. The fan 10 can have a plurality of blades (not shown) to blow air into the inlet plate 14 and across a motor 4. A second end of the gusset 18 is connected to the rail 28, and a motor support 20 connects, for example, perpendicularly to the rails 28. As illustrated in Figure 1, two motor supports 20 are attached perpendicularly to the two rails 28. The motor supports 20 may each include a notch 22, described in detail further herein.

The direct drive fan assembly 2 further includes a motor-plate assembly 24. The motor-plate assembly 24 is created from a combination of the motor 4 and a motor plate 6. A motor 4 among a plurality of motors can be matched to a motor plate 6 among a plurality of motor plates, the combination of which can form a plurality of different motor-plate assemblies 24 with different heights. The motor-plate assembly 24 is mounted and/or attached on top of the motor supports 20 of the direct drive fan assembly 2.

The centerline 30 is the center of the motor shaft of the motor-plate assembly 24. As illustrated in Figure 1, the motor shaft of the motor-plate assembly 24 goes along centerline 30, indicating the center of the motor shaft. The centerline 30 of the motor-plate assembly 24 can align with the hub 8 of the direct drive fan assembly 2 to connect the motor shaft to the hub 8. The direct drive fan assembly 2 includes a particular height HI at which the direct drive fan assembly 2 is calibrated. The particular height HI is the distance between the top of the motor supports 20 to the center of the hub 8 or other connection component for connection with the hub 8. For example, the particular height HI can be calibrated based on a predetermined motor 4 size in the direct drive fan assembly 2. In an embodiment, the particular height HI can be based on the centerline 30 of a motor shaft of a maximum sized motor 4 that may be intended to be connected to the hub 8. This is so that a particular fan assembly or the direct drive fan assembly 2 can accommodate the largest sized motor which would be used in the direct drive fan assembly 2; Different motor plates 6 may then be employed to provide any adjustment that may be needed when a smaller motor is used in the same type of direct drive fan assembly 2. In other words, HI is a constant height based on the size of a predetermined motor 4 in the direct drive fan assembly 2. HI is a constant height based on the size of the fan 8, and HI will not change by changing the size of the motor 4. In some embodiments, the plurality of different motor-plate assemblies 24 with different respective motor 4 heights and/or motor plate 6 heights may align the centerline 30 of the motor with the particular height H1 of the direct drive fan assembly 2, as discussed further herein.

Each motor support 20 of the direct drive fan assembly 2 includes a notch 22 in the base frame 20. The notches 22 can be utilized to decrease a respective height of the motor-plate assembly 24 relative to the direct drive fan assembly 2. The notches 22 can be advantageous such that the motor-plate assemblies can be used across multiple fan assembly 2 sizes. The notches 22 can aid in positioning the motor-plate assembly 24 by properly aligning the centerline 30 of the motor shaft with the hub 8 of the direct drive fan assembly 2, as discussed further herein.

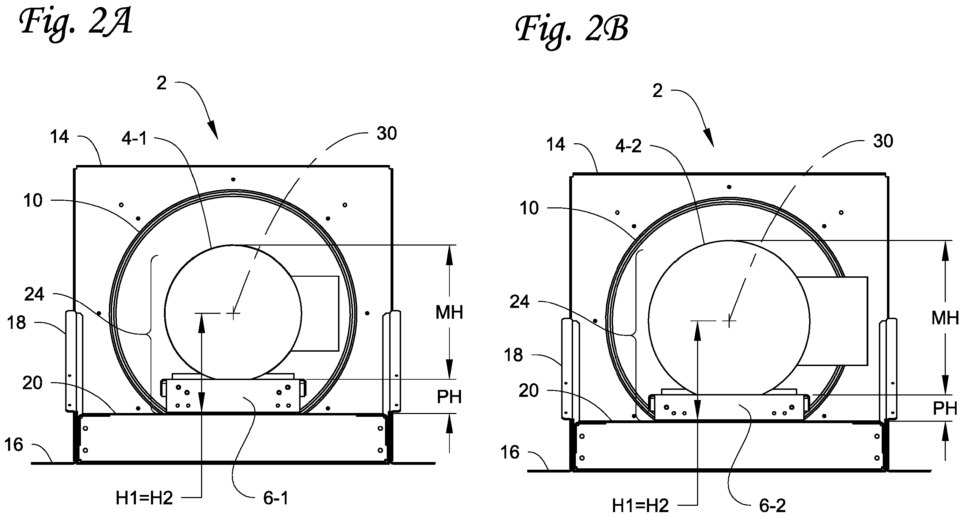

Figs. 2A and 2B illustrate different configurations of motor-plate assemblies, which are not according to the claimed invention.

For simplicity of the specification, identical features that were previously described will not be described again.

As described herein, each motor 4 can have a matching motor plate 6. The matching motor plate 6 is inversely related to the particular motor height of the motor 4. As illustrated in Figures 2A and 2B, a tall (e.g., larger) motor 4-2 is matched with a shorter (e.g., smaller) motor plate 6-2 in the direct drive fan assembly 2, while a short (e.g., smaller) motor 4-1 is matched with a tall (e.g., larger) motor plate 6-1. That is, a taller motor 4-2 with a taller motor height MH may be matched with a shorter motor plate 6-2, while a shorter motor 4-1 with a shorter motor height MH may be matched with a taller motor plate 6-1. A selected motor 4 will determine the particular matching motor plate 6. That is, the matching motor plate 6 is dependent upon the selected motor 4. For example, the matching motor-plate height PH is less than the motor-plate height PH in response to the different sized motors (e.g., 4-1, 4-2) with different respective motor heights MH

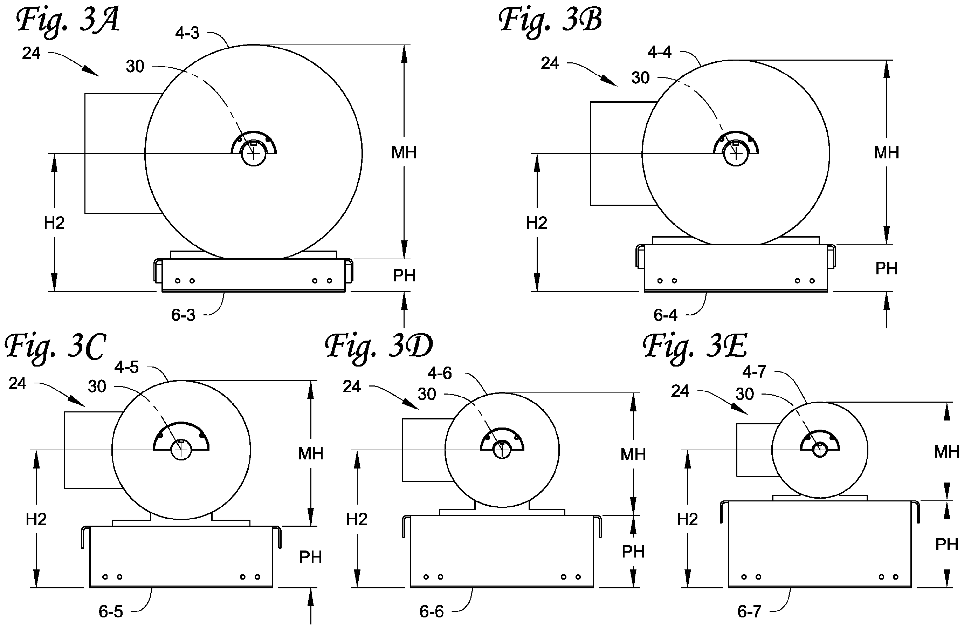

Although each of the motor-plate assemblies 24 is a combination of different sized components (e.g., motor 4, motor plate 6), a resulting height H2 (shown in Figures 3A - 3E) of the base of the motor plate to the centerline 30 of the shaft of the motor 4 for each embodiment, is equal to the particular height HI (shown in Figure 1) in the direct drive fan assembly 2 (e.g., H2 = HI). While different motor-plate assemblies 24 may vary (e.g., different sized motors 4, different sized motor-plates 6), the motor-plate assemblies 24 are assembled such that the centerline 30 of the motor shaft will align and connect with the hub (e.g., 8 in Figure 1) of the direct drive fan assembly 2. In other words, the particular height HI of the direct drive fan assembly 2 is equal to the resulting height H2 of the motor-plate assembly 24 (e.g., H2= HI as illustrated in Figures 3A - 3E), thereby aligning the centerline 30 to the hub of the direct drive fan assembly 2. Thus, regardless of the motor 4 and/or the motor plate 6 changing in the direct drive fan assembly 2, the resulting height H2 of the motor-plate assembly 24 will equal the particular height HI of the direct drive fan assembly 2. The motor shaft in various the motor-plate assembly 24 configurations will align to the direct drive fan assembly 2 for proper connection.

As described further herein, each resulting height H2 among the plurality of configurations of motor-plate assemblies (e.g., 24) can align the centerline 30 with the direct drive fan assembly 2.

Figs. 3A - 3E illustrate a plurality of configurations of motors-plate assemblies 24, which are not according to the claimed invention.

As illustrated in Figures 3A - 3E, a plurality of motor-plate assemblies 24 with various motors 4-3, 4-4, 4-5, 4-6, 4-7 (generally referred to herein as motors 4) are depicted with various matching motor-plates 6-3, 6-4, 6-5, 6-6, 6-7, etc. (generally referred to herein as motor-plates 6). The combination of one of the motors 4 and one of the motor plates 6 form a unique motor-plate assembly 24.

As previously described herein, the motor 4 height (e.g., MH in Figs. 2A and 2B) and the matching motor plate 6 height (e.g., PH in Figures 2A and 2B) are inversely related. As illustrated in Figures 3A - 3E, each of the plurality of motors 4 has a particular motor height MH that corresponds to a particular motor plate 6 with a different motor plate height PH. For instance, the taller the motor 4 (e.g., 4-3), the shorter the matching motor plate 6 (e.g., 6-3). Alternatively, the shorter the motor 4 (e.g., 4-7), the taller the matching motor plate 6 (e.g., 6-7).

The plurality of motor-plate assemblies 24 are formed from the various combinations between each of the motors 4 and matching motor-plates 6. However, each combination of the plurality of motor-plate assemblies 24 aligns the centerline 30 of the motor shaft with the direct drive fan assembly (e.g., 2 in Figures 1, 2A, and 2B). The motor-plate assembly 24 has a resulting height H2 of a distance from the centerline 30 of the motor shaft of the motor 4 to the base of the motor plate 6. That is, the distance from the centerline 30 of the motor shaft of the motor 4 to the base of the motor plate 6 defines the resulting height H2. As illustrated in Figures 3A - 3E, although the combination of the overall motor height MH and the motor plate height PH may differ, each combination results in the same height H2, as discussed further below.

For example, a direct drive fan assembly 2 can have a particular height of H1, while a largest/tallest motor 4-3 can be measured from a matching motor plate 6-3 to the centerline 30 of the motor shaft, giving a resulting height of H2. H2 will equal HI. Additionally, or alternatively, a smallest motor 4-7 can be measured from a matching motor plate of 6-7 to the centerline 30 of the motor shaft, giving a resulting height of H2. H2 will equal HI. As such, multiple combinations of motors 4 and motor plates 6 can be assembled to create various motor-plate assemblies 24, each of which can align with the direct drive fan assembly for proper operation.

The alignment of the centerline 30 to the direct drive fan assembly can be advantageous such that when the motor 4 is replaced, only the motor 4 and/or the motor plate 6 may be replaced. The direct drive fan assembly 2 components (e.g., fan 10, hub 8, isolator bracket 16, motor supports 20, gusset 18, inlet frame 14, etc. shown in Fig. 1) maintain the same arrangement and same component sizing.

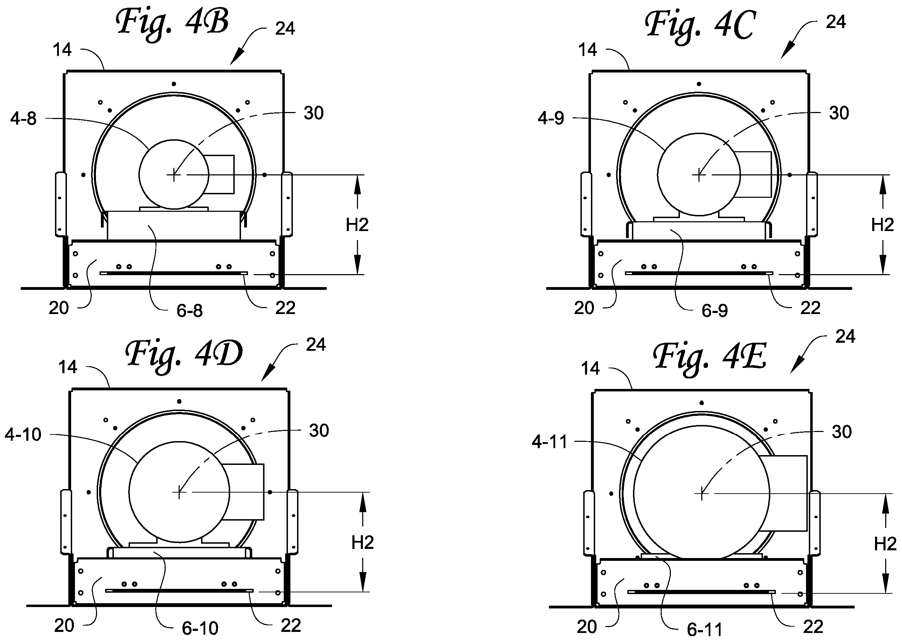

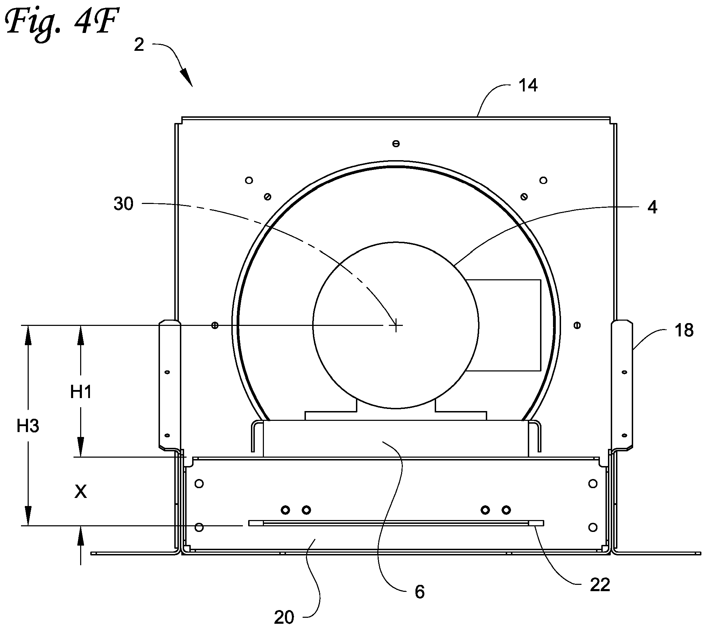

A notch 22 in each motor supports 20 is used to lower the motor-plate assembly 24 to aid in aligning the centerline 30 of the motor shaft with the hub of a relatively shorter direct drive fan assembly 2 and/or when the particular motor-plate assembly 24 exceeds a threshold height, as discussed further herein with respect to Figure 4F.

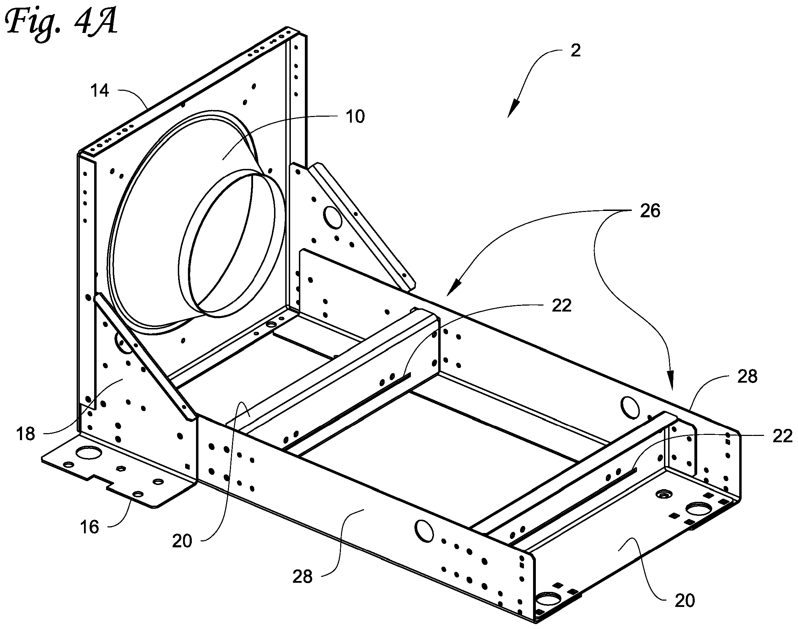

Fig. 4A illustrates a direct drive fan assembly frame 2, according to an embodiment. A direct drive direct drive fan assembly 2 previously described herein is depicted without a motor-plate assembly 24 or a fan 10. In some embodiments, the notch 22 in each motor support 20 of a relatively short direct drive fan assembly 2 may be used to lower a motor-plate assembly 24 to align the centerline 30 in the short direct drive fan assembly 2, as described further herein with respect to Figure 4F.

As shown in Figure 4A, the other parts of the direct drive fan assembly 2 components remain assembled (e.g., unchanged) even when the motor 4 and motor plate 6, which form a motor-plate assembly 24, are changed. In other words, although a motor 4 and/or a motor plate 6 may be changed for a different motor-plate assembly 24, the other components of the direct drive fan assembly 2 remain in an assembled configuration in the direct drive fan assembly 2, and only the motor-assembly 24 is altered. For instance, the direct drive fan assembly frame 2 comprised of the fan 10, the inlet plate 14, the isolator brackets 16, the rail 28, the gusset 18, and the motor supports 20, remain assembled in the frame when a motor 4 is changed.

Figs. 4B - 4E illustrate a plurality of configurations of motors-plate assemblies 24, according to an embodiment. As illustrated in Figs. 4B - 4E, a plurality of motor-plate assemblies 24 combinations are depicted. For example, motor 4-8 may be matched with motor plate 6-8, which illustrates a small motor 4-8 matched with a tall motor plate 6-8.

Each of the combinations of the motor 4 and the motor plate 6 form a unique motor-plate assembly 24. Each of the motor-plate assemblies 24 has a resulting height H2, which is the sum from the base of the motor plate 6 to the centerline 30 of the motor 4. The predetermined particular height HI of the direct drive fan assembly 2 is a constant distance (e.g., the center of hub 8 in Figure 1 to top of the motor supports 20). As such, the resulting height H2 of the motor-plate assembly 24 is equal to the particular height HI (H2 = HI) such that the centerline 30 aligns with the hub of the direct drive fan assembly 2.

In an embodiment, the direct drive fan assembly 2 can receive the motor-plate assembly 24 on the placement area 26 of the direct drive fan assembly 2. The placement area 26 is on top of the motor supports 20 attached to the rails 28. The motor-plate assembly 24 can be securely attached to the placement area 26 via suitable attachments, bolts, screws, or the like, for example. Each of the motor-plate assemblies 24 illustrated in Figures 4B - 4E can be placed on the placement area 26 of the direct drive fan assembly 2 of Figure 4A, and each centerline 30 of the motor shaft of the motor-plate assembly would align with the direct drive fan assembly 2 in Figure 4A for proper operation.

In some embodiments, the motor 4 may be changed to a different motor 4, such as for different torque requirements. When a motor 4 is changed in the motor-plate assembly 24, the height of the motor plate 6 may increase in response to a decreased motor 4 size. Alternatively, the height of the motor plate 6 may decrease in response to the motor 4 increasing in size (e.g., height). The corresponding motors 4 and plates 6 change inversely in response to the respective motor 4 size such that the centerline 30 of the motor shaft aligns with the direct drive fan assembly 2.

Fig. 4F illustrates a notch in each of the motor supports of the direct drive fan assembly, according to an embodiment of the disclosure.

Each notch 22 is a slot in a motor support 20 that enables the distance from the center of the hub to the top of the motor support 20 to be lowered (e.g., dropped),thereby increasing the height with the added distance X of the notch placement. Each notch 22 can receive a flange from the motor plate 6, such that the flanges of the motor plate 6 slide into the notches 22. Each flange of the motor plate 6 may be secured to the notch 22 with a bolt, screw, or like attachments.

The notches 22 can aid in properly aligning the centerline 30 of the motor shaft using various motors 4 matched to the motor plates 6. That is, different direct drive fan assemblies 2 may change the particular height HI. For instance, a shorter direct drive fan assembly 2 may be set to receive a short (e.g., small) motor 4, the motor 4 may be matched with the smallest motor plate 6. However, the resulting height H2 may still exceed the particular height HI (e.g., H2 > HI), thereby not allowing the motor 4 to be correctly aligned to a direct drive fan assembly 2. The motor-plate assembly 24 may exceed a threshold height such that even matching the motor 4 to a smallest motor plate 6 exceeds the particular height HI of the direct drive fan assembly. In these instances, the notches 22 may be used to modify the particular height HI to a modified height H3 that is equal to the sum of the original height of HI and a distance X (e.g., H3 = HI + X). For example, in a short direct drive fan assembly 2, the resulting height H2 of the motor-plate assemblies 24 as previously discussed with respect to Figs. 3A - 3E may not be equivalent to the particular height HI of the short direct drive fan assembly 2 due to a lowering of the center of the hub of smaller (shorter) fan. A motor 4 with the shortest motor plate may still have a height greater than HI. To accommodate the short (e.g., smaller) direct drive fan assembly 2, the notches 22 may be used to modify the particular height HI of the direct drive fan assembly and the resulting height H2 of the motor-plate assembly 24 to maintain the H1=H2 relationship.

As illustrated in Figure 4F, the short direct drive fan assembly 2 can use the notches 22 to modify the required particular height HI. The modified particular height H3 of the direct drive fan assembly 2 can be the sum of a distance measured from the center of the hub 30 of the direct drive fan assembly 2 to the top of the motor support 20 (illustrated in Figure 4F as H1, which is the original height as shown in Figure 1) and a distance from the top of the motor support 20 to the notch 22 (illustrated in Figure 4F as X) (e.g., HI + X = H3). Accordingly, the notches 22 lower the base of the motor-plate assembly 24 an additional distance X from its previous position where it was mounted and/or attached to the top of the motor supports 20. As such, the required height H2 of the motor-plate assembly 24 is measured from the notch 22 to the center of the hub 8 (H3) instead of from motor supports 20 to the center of the hub 8 (H1) as required in other embodiments when the base of the motor-plate assembly 24 was mounted to the top of the motor supports 20.

The notches 22 can be used to accommodate different fan sizes and/or changes of the motor 4 (e.g., size). Thus, when the distance from the center of a hub to the top of the motor support 20 of a direct drive fan assembly 2 changes due to a different fan size, the notches 22 can be used to lower the motor-plate assembly 24 to accommodate the particular fan sizes and motor 4 to properly align the centerline 30 of the motor shaft with the hub. The notches 22 can be advantageous such that the motor-plate assemblies 24 can be used across multiple fan assembly 2 sizes to keep the H1 and H2 relationship.

Alternatively, in some embodiments, an oversized motor that exceeds the centerline of the maximum motor 4 may utilize the notches 22 to lower the centerline 30 so as to align with the direct drive fan assembly 2. Although the notches 22 are illustrated in the motor support 20 of a short direct drive fan assembly, it will be appreciated that the use of the notch could apply to size changes on the motor plate assembly side.

It may be appreciated that the particular height HI and the resulting height H2 are equal and still align the centerline 30 of the motor shaft with the direct drive fan assembly 2 even though measured from different reference points and minor variance from measuring may be present. That is, measuring from the top of the motor support 20 to the center of the hub (e.g., 8 in Figure 1) to determine the particular height H1, or measuring from the notch 22 to the center of the hub to determine the modified particular height H3, may still be equivalent to the resulting H2 that is measured from the base of the motor plate 6 to the centerline 30 of the motor shaft. The minor variance that may be present between H2 and H1 (or H3) is deemed to be a deminimus amount and does not impede alignment.

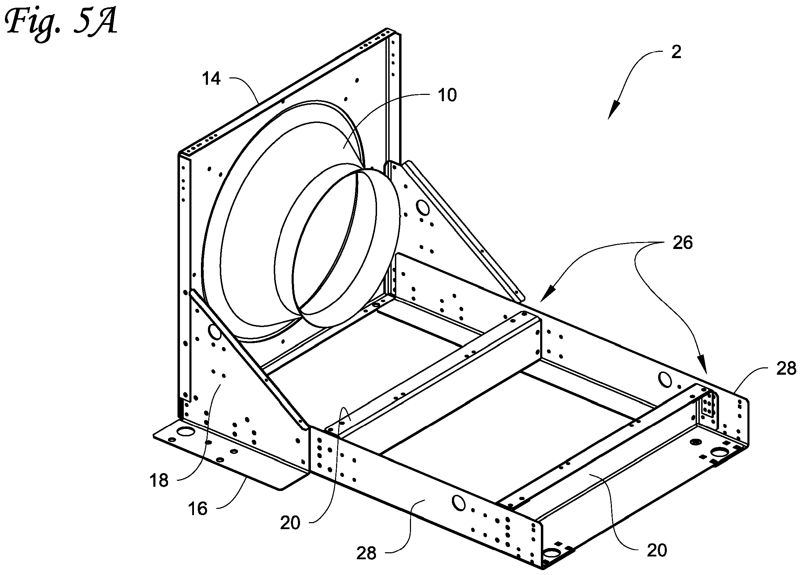

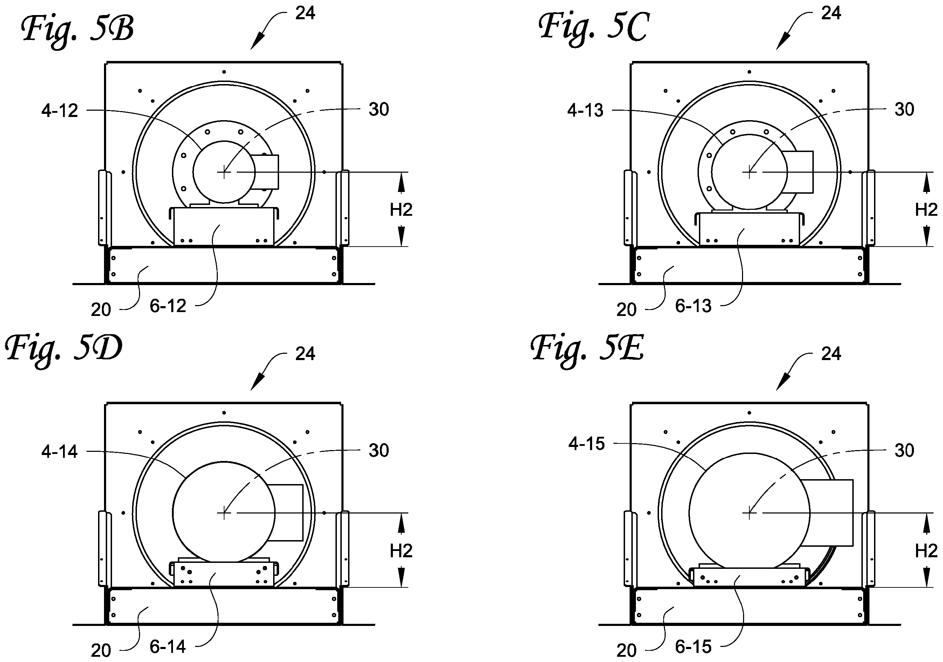

Fig. 5A illustrates a direct drive fan assembly frame, which is not according to the claimed invention.

A direct drive fan assembly 2 previously described herein is depicted without a motor-plate assembly 24. As previously described herein, in some embodiments, the motor supports 20 of the direct drive fan assembly 2 may include notches (e.g., 22 in Figure 4F), which may be used to lower the motor-plate assembly 24 to accommodate a motor 4 in a shorter direct fan assembly 2, although the notches 22 may also be used in a taller (e.g., larger) direct drive fan assembly 2. The notches 22 can function to align the centerline (e.g., 30 in Figure 1) with the hub of the direct drive fan assembly 2 as previously described herein.

Figs. 5B - 5E illustrate another configuration of a plurality of configurations of motors-plate assemblies, which are not according to the invention. Similar to Figure 4B, as illustrated in Figure 5B, the motor 4 can be a particular motor from among a plurality of motors 4-12, 4-13, 4-14, 4-15, etc. (generally referred to herein as motors 4), and each motor 4 among the plurality of motors 4 includes a different height and/or length of a motor frame size that corresponds to a different matching motor plate 6.

Each of the plurality of motors 4-12, 4-13, 4-14, 4-15 is paired with a one of a plurality of motor-plates 6-12, 6-13, 6-14, 6-15, etc. (generally referred to herein as motor-plates 6) to form a plurality of various combinations of motor-plate assemblies 24. The inverse height relationship between the each of the plurality of motors 4 and each of the different matching motor-plates 6 can form different motor-plate assemblies 24 with a centerline 30 of the motor shaft aligning with the direct drive fan assembly 2.

Changing the motor 4 to a different motor 4 occurs, which may result in changing the motor plate 6 to a different motor plate 6 in response to the changed motor 4. That is, the motor plate 6 is dependent upon a selected motor 4. The different motor 4 may be matched to a different motor plate 6 to create a different motor-plate assembly 24. Various combinations of motor-plate assemblies can be formed in such a manner.

While each motor 4 and the motor plate 6 may vary in height, the motor-plate assembly 24 can have a resulting height H2, which is the sum from the base of the motor plate 6 to the centerline 30 of the motor 4. The predetermined particular height HI of the direct drive fan assembly 2 is a constant distance (e.g., center of hub 8 in Figure 1 to top of motor plate 20). As such, the resulting height H2 of the motor-plate assembly 24 is equal to the particular height HI (H2 = HI) such that the centerline 30 aligns with the direct drive fan assembly 2.

Each of the various combinations of motor-plate assemblies 24 can be received on the placement area 26 of the direct drive fan assembly 2, as previously described with respect to Figure 4A. The direct drive fan assembly 2 may receive one of the motor-plate assemblies on the placement area 26 and function without additional changes to the frame or support components of the direct drive fan assembly 2 because the centerline 30 of the motor shaft of the motor-plate assembly 24 aligns with the direct drive fan assembly 2.

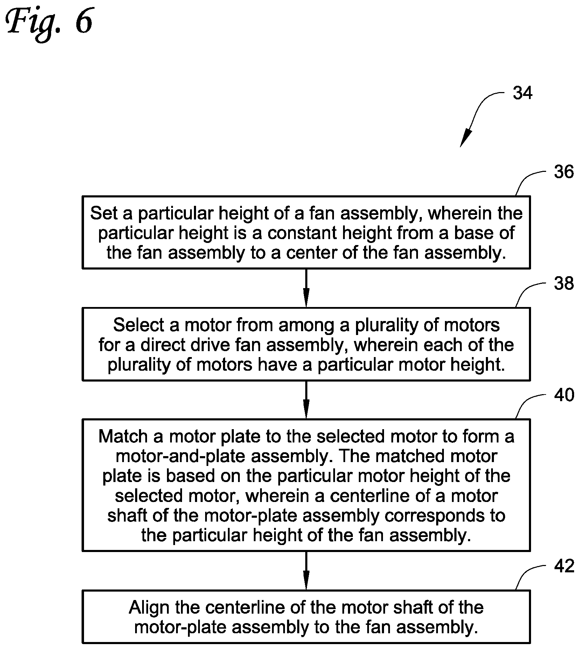

Fig. 6 illustrates a method flow chart which is not according to the claimed invention. The method 34 describes aligning a centerline of a motor shaft in a direct drive fan assembly while minimizing components.

At box 36, the method 34 includes setting a particular height HI of a direct drive fan assembly, wherein the particular height is a constant height from a base of the direct drive fan assembly to a center of the direct drive fan assembly. The particular height HI is measured from a top of a motor support to a center of a hub of a direct drive fan assembly. The particular height HI can be based on a largest motor size available that the direct drive fan assembly can accommodate.

At box 38, the method 34 includes selecting a motor from among a plurality of motors for a direct drive fan assembly. For instance, the selected motor can be a tall motor or a short motor, depending upon the specific direct drive fan assembly. Each of the plurality of motors has a particular motor height. The particular motor height can correspond to the size of the selected motor. For example, a larger motor can be taller than a smaller motor, which may be shorter.

At box 40, the method 34 includes matching a motor plate to the selected motor to form a motor and plate assembly, the matched motor plate is based on the particular motor height of the selected motor. That is, the selected motor determines a corresponding motor-plate. For example, the motor height MH determines which motor plate height PH is matched to form the motor-plate assembly. The resulting height H2 from the centerline of the motor to the base of the motor plate is equal to the particular height HI of the direct drive fan assembly. As such, the resulting height H2 of the motor-plate assembly is equal to the particular height HI (H2=H1), such that the centerline is aligned with the direct drive fan assembly for proper operation.

At box 42, the method 34 includes aligning the centerline of the motor shaft of the motor-plate assembly to the direct drive fan assembly. The motor-plate assembly can be installed in the direct drive fan assembly for operation. Many different combinations of motor-plate assemblies can operate within the direct drive fan assembly without replacing additional components of the direct drive fan assembly, as previously described herein.

The terminology used in this Specification is intended to describe particular embodiments and is not intended to be limiting. The terms "a," "an," and "the" include the plural forms as well, unless clearly indicated otherwise. The terms "comprises" and/or "comprising," when used in this Specification, indicate the presence of the stated features, integers, steps, operations, elements, and/or components, but do not preclude the presence or addition of one or more other features, integers, steps, operations, elements, and/or components.

With regard to the preceding description, it is to be understood that changes may be made in detail, especially in matters of the construction materials employed and the shape, size, and arrangement of parts without departing from the scope of the present disclosure. The word "embodiment" as used within this Specification may, but does not necessarily, refer to the same embodiment. This Specification and the embodiments described are exemplary only. Other and further embodiments may be devised without departing from the basic scope thereof, with the true scope of the invention being indicated by the claims that follow.

## Claims

1. A method for aligning a centerline (30) of a motor shaft in a direct drive fan assembly (2), the direct drive fan assembly (2) includes a hub (8), a fan (10) and two motor supports (20) that each include a respective notch (22), the method comprising:
selecting a motor (4) from among a plurality of motors (4);
matching a motor plate (6) from among a plurality of motor plates (6) to the motor (4), the matched motor plate (6) is based on the selected motor (4),
creating, from the selected motor (4) and the matching motor plate (6), a motor-plate assembly (24) that has a resulting height (H2) that is measured from a base of the matching motor plate (6) to a centerline (30) of a motor shaft of the selected motor (4), wherein the resulting height (H2) of the motor-plate assembly (24) corresponds to a particular height (H1) of the direct drive fan assembly (2);
aligning a centerline (30) of the motor shaft of the motor-plate assembly (24) to the direct drive fan assembly (2), wherein the particular height (H1) of the direct drive fan assembly (2) is measured from a top of the motor supports (20) to a center of the hub (8);
changing the motor (4) to a different motor (4);
changing the motor plate (6) to a different motor plate (6) in response to the changed motor (4), the different motor plate (6) comprising two flanges;
matching the different motor (4) to the different motor plate (6) to create a different motor-plate assembly (24) that has a second resulting height (H2) that is measured from a base of the different motor plate (6) to a centerline (30) of a motor shaft of the different motor (4);
receiving, by each notch (22) of each motor support (20), a respective flange of the two flanges of the different motor plate (6); and
aligning the centerline (30) of the motor shaft of the different motor-plate assembly (24) to the direct drive fan assembly (2),
wherein the second resulting height (H2) is equal to a different particular height (H3) of the direct drive fan assembly (2) that is measured from the notches (22) to the center of the hub (8), and
wherein the direct drive fan assembly (2) includes a frame (20) with components that remain in a fixed arrangement even when the motor-plate assembly (24) is changed.

2. The method of claim 1, wherein
each motor (4) among the plurality of motors (4) has a particular motor height (MH),
each motor plate (6) among the plurality of motor plates (6) has a particular motor plate height (PH).

3. The method of claim 1, further comprising:
receiving the motor-plate assembly (24) on a placement area (26) of the direct drive fan assembly (2).

4. The method of claim 1, further comprising:
setting the particular height (H1) of the direct drive fan assembly (2) based on a maximum motor size (4), wherein the particular height (H1) of the direct drive fan assembly (2) determines the resulting height of the motor-plate assembly (24).

5. A method for minimizing components in a direct drive fan assembly (2), the direct drive fan assembly (2) including a hub (8), a fan (10) and two motor supports (20) that each include a respective notch (22), the method comprising:
setting a particular height (H1) of a direct drive fan assembly (2), wherein the particular height (H1) is measured from a top of the motor supports (20) of the direct drive fan assembly (2) to a center of the hub (8) of the direct drive fan assembly (2);
selecting a motor (4) from among a plurality of motors (4) for the direct drive fan assembly (2), wherein each of the plurality of motors (4) has a particular motor height (MH);
matching a motor plate (6) to the selected motor (4) to form a motor-plate assembly (24) having a resulting height (H2) that is measured from a base of the matching motor plate (6) to a centerline (30) of a motor shaft of the selected motor (4), the matched motor plate (6) is based on the particular motor height (MH) of the selected motor (4), wherein the resulting height (H2) of the motor-plate assembly (24) is equal to the particular height (H1) of the direct drive fan assembly (2);
aligning the centerline (30) of the motor shaft of the motor-plate assembly (24) to the direct drive fan assembly (2), wherein the particular height (H1) of the direct drive fan assembly (2) is measured from a top of the motor supports (20) to a center of the hub (8);
changing the motor (4) to a different motor (4);
changing the motor plate (6) to a different motor plate (6) in response to the changed motor (4), the different motor plate (6) comprising two flanges;
matching the different motor (4) to the different motor plate (6) to create a different motor-plate assembly (24) that has a second resulting height (H2) that is measured from a base of the different motor plate (6) to a centerline (30) of a motor shaft of the different motor (4);
receiving, by each notch (22) of each motor support (20), a respective flange of the two flanges of the different motor plate (6); and
aligning the centerline (30) of the motor shaft of the different motor-plate assembly (24) to the direct drive fan assembly (2),
wherein the second resulting height (H2) is equal to a different particular height (H3) of the direct drive fan assembly (2) that is measured from the notches (22) to the center of the hub (8), and
wherein the direct drive fan assembly (2) includes a frame (20) with components that remain in a fixed arrangement even when the motor-plate assembly (24) is changed.

6. The method of claim 5, further comprising:
matching each of the plurality of motors (4) with different particular motor heights (MH) to a particular motor plate (6) with a different motor plate height (PH), and
creating a plurality of motor-plate assemblies (24) from various combinations of the motor (4) and matching motor plates (6).

7. A direct drive fan assembly (2), comprising:
a direct drive fan assembly frame (20) that includes two motor supports (20) and a hub (8) connected to the frame (20), the two motor supports (20) each including a respective notch (22);
a motor-plate assembly (24) that includes a motor (4) with a motor shaft and matching motor plate (6), wherein the motor-plate assembly (24) is connected to the motor support (20) of the direct drive fan assembly (2);
a particular height (H1) for the direct drive fan assembly (2), wherein the particular height (H1) is measured from a top of the motor support (20) to a center of the hub (8);
a different particular height (H3) of the direct drive fan assembly (2), wherein the different particular height (H3) is measured from the notches (22) to the center of the hub (8);
a resulting height (H2) for the motor-plate assembly (24), wherein the resulting height (H2) is measured from a base of the motor-plate (6) to a centerline (30) of the motor shaft;
wherein the resulting height (H2) of the motor-plate assembly (24) corresponds to the particular height (H1) of the direct drive fan assembly (2)
wherein each notch (22) of each of the two motor supports (20) is configured to receive a respective flange of a pair of flanges of a different motor plate (6) that has been matched with a different motor (4) to create a different motor plate assembly (24) that has a second resulting height (H2) that is measured from a base of the different motor plate (6) to a centerline (30) of a motor shaft of the different motor (4) and that is equal to the different particular height (H3).

8. The direct drive fan assembly of claim 7, wherein the motor (4) and the matching motor plate (6) have an inverse size relationship.

## Patentansprüche

1. Verfahren zum Ausrichten einer Mittellinie (30) einer Motorwelle in einer Direktantriebslüfterbaugruppe (2), wobei die Direktantriebslüfterbaugruppe (2) eine Nabe (8), einen Lüfter (10) und zwei Motorhalterungen (20), die jeweils eine jeweilige Kerbe (22) umfassen, umfasst, wobei das Verfahren Folgendes umfasst:
Auswählen eines Motors (4) aus einer Mehrzahl von Motoren (4);
Anpassen einer Motorplatte (6) aus einer Mehrzahl von Motorplatten (6) an den Motor (4), wobei die angepasste Motorplatte (6) auf dem ausgewählten Motor (4) basiert,
Herstellen, aus dem ausgewählten Motor (4) und der passenden Motorplatte (6), einer Motorplattenbaugruppe (24), die eine resultierende Höhe (H2) aufweist, die von einer Basis der passenden Motorplatte (6) zu einer Mittellinie (30) einer Motorwelle des ausgewählten Motors (4) gemessen wird, wobei die resultierende Höhe (H2) der Motorplattenbaugruppe (24) einer speziellen Höhe (H1) der Direktantriebslüfterbaugruppe (2) entspricht;
Ausrichten einer Mittellinie (30) der Motorwelle der Motorplattenbaugruppe (24) auf die Direktantriebslüfterbaugruppe (2), wobei die spezielle Höhe (H1) der Direktantriebslüfterbaugruppe (2) von einer Oberseite der Motorhalterungen (20) zu einer Mitte der Nabe (8) gemessen wird;
Ändern des Motors (4) auf einen unterschiedlichen Motor (4);
Ändern der Motorplatte (6) auf eine unterschiedliche Motorplatte (6) in Reaktion auf den geänderten Motor (4), wobei die unterschiedliche Motorplatte (6) zwei Flansche umfasst;
Anpassen des unterschiedlichen Motors (4) an die unterschiedliche Motorplatte (6), um eine unterschiedliche Motorplattenbaugruppe (24) herzustellen, die eine zweite resultierende Höhe (H2) aufweist, die von einer Basis der unterschiedlichen Motorplatte (6) zu einer Mittellinie (30) einer Motorwelle des unterschiedlichen Motors (4) gemessen wird;
Aufnehmen, durch jede Kerbe (22) jeder Motorhalterung (20), eines jeweiligen Flansches der zwei Flansche der unterschiedlichen Motorplatte (6); und
Ausrichten der Mittellinie (30) der Motorwelle der unterschiedlichen Motorplattenbaugruppe (24) auf die Direktantriebslüfterbaugruppe (2),
wobei die zweite resultierende Höhe (H2) gleich einer unterschiedlichen speziellen Höhe (H3) der Direktantriebslüfterbaugruppe (2) ist, die von den Kerben (22) zu der Mitte der Nabe (8) gemessen wird, und
wobei die Direktantriebslüfterbaugruppe (2) einen Rahmen (20) mit Komponenten umfasst, die in einer festen Anordnung bleiben, selbst wenn die Motorplattenbaugruppe (24) verändert wird.

2. Verfahren nach Anspruch 1, wobei
jeder Motor (4) aus der Mehrzahl von Motoren (4) eine spezielle Motorhöhe (MH) aufweist,
jede Motorplatte (6) aus der Mehrzahl von Motorplatten (6) eine spezielle Motorplattenhöhe (PH) aufweist.

3. Verfahren nach Anspruch 1, ferner umfassend:
Aufnehmen der Motorplattenbaugruppe (24) an einem Platzierungsbereich (26) der Direktantriebslüfterbaugruppe (2).

4. Verfahren nach Anspruch 1, ferner umfassend:
Einstellen der speziellen Höhe (H1) der Direktantriebslüfterbaugruppe (2) basierend auf einer maximalen Motorgröße (4), wobei die spezielle Höhe (H1) der Direktantriebslüfterbaugruppe (2) die resultierende Höhe der Motorplattenbaugruppe (24) bestimmt.

5. Verfahren zum Minimieren von Komponenten in einer Direktantriebslüfterbaugruppe (2), wobei die Direktantriebslüfterbaugruppe (2) eine Nabe (8), einen Lüfter (10) und zwei Motorhalterungen (20), die jeweils eine jeweilige Kerbe (22) umfassen, umfasst, wobei das Verfahren Folgendes umfasst:
Einstellen einer speziellen Höhe (H1) einer Direktantriebslüfterbaugruppe (2), wobei die spezielle Höhe (H1) von einer Oberseite der Motorhalterungen (20) der Direktantriebslüfterbaugruppe (2) zu einer Mitte der Nabe (8) der Direktantriebslüfterbaugruppe (2) gemessen wird;
Auswählen eines Motors (4) aus einer Mehrzahl von Motoren (4) für die Direktantriebslüfterbaugruppe (2), wobei jeder der Mehrzahl von Motoren (4) eine spezielle Motorhöhe (MH) aufweist;
Anpassen einer Motorplatte (6) an den ausgewählten Motor (4), um eine Motorplattenbaugruppe (24) zu bilden, die eine resultierende Höhe (H2) aufweist, die von einer Basis der passenden Motorplatte (6) zu einer Mittellinie (30) einer Motorwelle des ausgewählten Motors (4) gemessen wird, wobei die angepasste Motorplatte (6) auf der speziellen Motorhöhe (MH) des ausgewählten Motors (4) basiert, wobei die resultierende Höhe (H2) der Motorplattenbaugruppe (24) gleich der speziellen Höhe (H1) der Direktantriebslüfterbaugruppe (2) ist;
Ausrichten der Mittellinie (30) der Motorwelle der Motorplattenbaugruppe (24) auf die Direktantriebslüfterbaugruppe (2), wobei die spezielle Höhe (H1) der Direktantriebslüfterbaugruppe (2) von einer Oberseite der Motorhalterungen (20) zu einer Mitte der Nabe (8) gemessen wird;
Ändern des Motors (4) auf einen unterschiedlichen Motor (4);
Ändern der Motorplatte (6) auf eine unterschiedliche Motorplatte (6) in Reaktion auf den geänderten Motor (4), wobei die unterschiedliche Motorplatte (6) zwei Flansche umfasst;
Anpassen des unterschiedlichen Motors (4) an die unterschiedliche Motorplatte (6), um eine unterschiedliche Motorplattenbaugruppe (24) herzustellen, die eine zweite resultierende Höhe (H2) aufweist, die von einer Basis der unterschiedlichen Motorplatte (6) zu einer Mittellinie (30) einer Motorwelle des unterschiedlichen Motors (4) gemessen wird;
Aufnehmen, durch jede Kerbe (22) jeder Motorhalterung (20), eines jeweiligen Flansches der zwei Flansche der unterschiedlichen Motorplatte (6); und
Ausrichten der Mittellinie (30) der Motorwelle der unterschiedlichen Motorplattenbaugruppe (24) auf die Direktantriebslüfterbaugruppe (2),
wobei die zweite resultierende Höhe (H2) gleich einer unterschiedlichen speziellen Höhe (H3) der Direktantriebslüfterbaugruppe (2) ist, die von den Kerben (22) zu der Mitte der Nabe (8) gemessen wird, und
wobei die Direktantriebslüfterbaugruppe (2) einen Rahmen (20) mit Komponenten umfasst, die in einer festen Anordnung bleiben, selbst wenn die Motorplattenbaugruppe (24) verändert wird.

6. Verfahren nach Anspruch 5, ferner umfassend:
Anpassen jedes der Mehrzahl von Motoren (4) mit unterschiedlichen speziellen Motorhöhen (MH) an eine spezielle Motorplatte (6) mit einer unterschiedlichen Plattenhöhe (PH), und
Herstellen einer Mehrzahl von Motorplattenbaugruppen (24) aus verschiedenen Kombinationen des Motors (4) und passender Motorplatten (6) .

7. Direktantriebslüfterbaugruppe (2), umfassend:
einen Direktantriebslüfterbaugruppenrahmen (20), der zwei Motorhalterungen (20) und eine mit dem Rahmen (20) verbundene Nabe (8) umfasst, wobei die zwei Motorhalterungen (20) jeweils eine jeweilige Kerbe (22) umfassen;
eine Motorplattenbaugruppe (24), die einen Motor (4) mit einer Motorwelle und einer passenden Motorplatte (6) umfasst, wobei die Motorplattenbaugruppe (24) mit der Motorhalterung (20) der Direktantriebslüfterbaugruppe (2) verbunden ist;
eine spezielle Höhe (H1) für die Direktantriebslüfterbaugruppe (2), wobei die spezielle Höhe (H1) von einer Oberseite der Motorhalterung (20) zu einer Mitte der Nabe (8) gemessen ist;
eine unterschiedliche spezielle Höhe (H3) der Direktantriebslüfterbaugruppe (2), wobei die unterschiedliche spezielle Höhe (H3) von den Kerben (22) zu der Mitte der Nabe (8) gemessen ist;
eine resultierende Höhe (H2) für die Motorplattenbaugruppe (24), wobei die resultierende Höhe (H2) von einer Basis der Motorplatte (6) zu einer Mittellinie (30) der Motorwelle gemessen ist;
wobei die resultierende Höhe (H2) der Motorplattenbaugruppe (24) der speziellen Höhe (H1) der Direktantriebslüfterbaugruppe (2) entspricht,
wobei jede Kerbe (22) jeder der zwei Motorhalterungen (20) dazu ausgelegt ist, einen jeweiligen Flansch eines Paars von Flanschen einer unterschiedlichen Motorplatte (6) aufzunehmen, die an einen unterschiedlichen Motor (4) angepasst wurde, um eine unterschiedliche Motorplattenbaugruppe (24) herzustellen, die eine zweite resultierende Höhe (H2) aufweist, die von einer Basis der unterschiedlichen Motorplatte (6) zu einer Mittellinie (30) einer Motorwelle des unterschiedlichen Motors (4) gemessen ist und die gleich der unterschiedlichen speziellen Höhe (H3) ist.

8. Direktantriebslüfterbaugruppe nach Anspruch 7, wobei der Motor (4) und die passende Motorplatte (6) eine inverse Größenbeziehung aufweisen.

## Revendications

1. Procédé d'alignement d'une ligne médiane (30) d'un arbre de moteur dans un ensemble ventilateur à entraînement direct (2), l'ensemble ventilateur à entraînement direct (2) comprenant un moyeu (8), un ventilateur (10) et deux supports de moteur (20) qui comprennent chacun une fente (22) respective, le procédé comprenant :
la sélection d'un moteur (4) parmi une pluralité de moteurs (4) ;
l'appariement d'une plaque de montage de moteur (6), parmi une pluralité de plaques de montage de moteur (6), avec le moteur (4), la plaque de montage de moteur (6) appariée étant fonction du moteur (4) sélectionné,
la création, à partir du moteur (4) sélectionné et de la plaque de montage de moteur (6) appariée, d'un ensemble moteur/plaque (24) présentant une hauteur résultante (H2) qui est mesurée d'une base de la plaque de montage de moteur (6) appariée à une ligne médiane (30) d'un arbre de moteur du moteur (4) sélectionné, la hauteur résultante (H2) de l'ensemble moteur/plaque (24) correspondant à une hauteur spécifique (H1) de l'ensemble ventilateur à entraînement direct (2) ;
l'alignement d'une ligne médiane (30) de l'arbre de moteur de l'ensemble moteur/plaque (24) par rapport à l'ensemble ventilateur à entraînement direct (2), la hauteur spécifique (H1) de l'ensemble ventilateur à entraînement direct (2) étant mesurée d'un sommet des supports de moteur (20) à un centre du moyeu (8) ;
le remplacement du moteur (4) par un moteur (4) différent ;
le remplacement de la plaque de montage de moteur (6) par une plaque de montage de moteur (6) différente en conséquence du remplacement du moteur (4), la plaque de montage de moteur (6) différente comprenant deux ailettes ;
l'appariement du moteur (4) différent avec la plaque de montage de moteur (6) différente afin de créer un ensemble moteur/plaque (24) différent présentant une seconde hauteur résultante (H2) qui est mesurée d'une base de la plaque de montage de moteur (6) différente à une ligne médiane (30) d'un arbre de moteur du moteur (4) différent ;
la réception, par chaque fente (22) de chaque support de moteur (20), d'une ailette respective parmi les deux ailettes de la plaque de montage de moteur (6) différente ; et
l'alignement de la ligne médiane (30) de l'arbre de moteur de l'ensemble moteur/plaque (24) différent par rapport à l'ensemble ventilateur à entraînement direct (2),
dans lequel la seconde hauteur résultante (H2) est égale à une hauteur spécifique (H3) différente de l'ensemble ventilateur à entraînement direct (2) qui est mesurée des fentes (22) au centre du moyeu (8), et
dans lequel l'ensemble ventilateur à entraînement direct (2) comprend un châssis (20) avec des composants qui demeurent dans un agencement fixe même lorsque l'ensemble moteur/plaque (24) est remplacé.

2. Procédé selon la revendication 1, dans lequel
chaque moteur (4) parmi la pluralité de moteurs (4) présente une hauteur de moteur spécifique (MH),
chaque plaque de montage de moteur (6) parmi la pluralité de plaques de montage de moteur (6) présente une hauteur de plaque de montage de moteur spécifique (PH) .

3. Procédé selon la revendication 1, comprenant, en outre :
la réception de l'ensemble moteur/plaque (24) sur une région d'installation (26) de l'ensemble ventilateur à entraînement direct (2).

4. Procédé selon la revendication 1, comprenant, en outre :
la définition de la hauteur spécifique (H1) de l'ensemble ventilateur à entraînement direct (2) en fonction d'une taille de moteur (4) maximale, la hauteur spécifique (H1) de l'ensemble ventilateur à entraînement direct (2) déterminant la hauteur résultante de l'ensemble moteur/plaque (24).

5. Procédé de réduction du nombre de composants dans un ensemble ventilateur à entraînement direct (2), l'ensemble ventilateur à entraînement direct (2) comprenant un moyeu (8), un ventilateur (10) et deux supports de moteur (20) qui comprennent chacun une fente (22) respective, le procédé comprenant :
la définition d'une hauteur spécifique (H1) d'un ensemble ventilateur à entraînement direct (2), la hauteur spécifique (H1) étant mesurée d'un sommet des supports de moteur (20) de l'ensemble ventilateur à entraînement direct (2) à un centre du moyeu (8) de l'ensemble ventilateur à entraînement direct (2) ;
la sélection d'un moteur (4) parmi une pluralité de moteurs (4) pour l'ensemble ventilateur à entraînement direct (2), chacun de la pluralité de moteurs (4) présentant une hauteur de moteur spécifique (MH) ;
l'appariement d'une plaque de montage de moteur (6) avec le moteur (4) sélectionné, afin de former un ensemble moteur/plaque (24) présentant une hauteur résultante (H2) qui est mesurée d'une base de la plaque de montage de moteur (6) appariée à une ligne médiane (30) d'un arbre de moteur du moteur (4) sélectionné, la plaque de montage de moteur (6) appariée étant fonction de la hauteur de moteur spécifique (MH) du moteur (4) sélectionné, la hauteur résultante (H2) de l'ensemble moteur/plaque (24) étant égale à la hauteur spécifique (H1) de l'ensemble ventilateur à entraînement direct (2) ;
l'alignement de la ligne médiane (30) de l'arbre de moteur de l'ensemble moteur/plaque (24) par rapport à l'ensemble ventilateur à entraînement direct (2), la hauteur spécifique (H1) de l'ensemble ventilateur à entraînement direct (2) étant mesurée d'un sommet des supports de moteur (20) à un centre du moyeu (8) ;
le remplacement du moteur (4) par un moteur (4) différent ;
le remplacement de la plaque de montage de moteur (6) par une plaque de montage de moteur (6) différente en conséquence du remplacement du moteur (4), la plaque de montage de moteur (6) différente comprenant deux ailettes ;
l'appariement du moteur (4) différent avec la plaque de montage de moteur (6) différente afin de créer un ensemble moteur/plaque (24) différent présentant une seconde hauteur résultante (H2) qui est mesurée d'une base de la plaque de montage de moteur (6) différente à une ligne médiane (30) d'un arbre de moteur du moteur (4) différent ;
la réception, par chaque fente (22) de chaque support de moteur (20), d'une ailette respective parmi les deux ailettes de la plaque de montage de moteur (6) différente ; et
l'alignement de la ligne médiane (30) de l'arbre de moteur de l'ensemble moteur/plaque (24) différent par rapport à l'ensemble ventilateur à entraînement direct (2),
dans lequel la seconde hauteur résultante (H2) est égale à une hauteur spécifique (H3) différente de l'ensemble ventilateur à entraînement direct (2) qui est mesurée des fentes (22) au centre du moyeu (8), et
dans lequel l'ensemble ventilateur à entraînement direct (2) comprend un châssis (20) avec des composants qui demeurent dans un agencement fixe même lorsque l'ensemble moteur/plaque (24) est remplacé.

6. Procédé selon la revendication 5, comprenant, en outre :
l'appariement de chacun de la pluralité de moteurs (4) présentant des hauteurs de moteur spécifiques (MH) différentes avec une plaque de montage de moteur (6) spécifique présentant une hauteur de plaque de montage de moteur (PH) différente, et
la création d'une pluralité d'ensembles moteur/plaque (24) à partir de diverses combinaisons de moteurs (4) et de plaques de montage de moteur (6) appariées.

7. Ensemble ventilateur à entraînement direct (2), comprenant :
un châssis (20) d'ensemble ventilateur à entraînement direct (2) qui comprend deux supports de moteur (20) et un moyeu (8) raccordé au châssis (20), les deux supports de moteur (20) comprenant chacun une fente (22) respective ;
un ensemble moteur/plaque (24) qui comprend un moteur (4), comportant un arbre de moteur, et une plaque de montage de moteur (6) appariée, l'ensemble moteur/plaque (24) étant raccordé aux supports de moteur (20) de l'ensemble ventilateur à entraînement direct (2) ;
une hauteur spécifique (H1) pour l'ensemble ventilateur à entraînement direct (2), la hauteur spécifique (H1) étant mesurée d'un sommet des supports de moteur (20) à un centre du moyeu (8) ;
une hauteur spécifique (H3) différente de l'ensemble ventilateur à entraînement direct (2), la hauteur spécifique (H3) différente étant mesurée des fentes (22) au centre du moyeu (8) ;
une hauteur résultante (H2) pour l'ensemble moteur/plaque (24), la hauteur résultante (H2) étant mesurée d'une base de la plaque de montage de moteur (6) à une ligne médiane (30) de l'arbre de moteur ;
dans lequel la hauteur résultante (H2) de l'ensemble moteur/plaque (24) correspond à la hauteur spécifique (H1) de l'ensemble ventilateur à entraînement direct (2),
dans lequel chaque fente (22) de chacun des deux supports de moteur (20) est conçue pour recevoir une ailette respective d'une paire d'ailettes d'une plaque de montage de moteur (6) différente qui a été appariée avec un moteur (4) différent afin de créer un ensemble moteur/plaque (24) différent présentant une seconde hauteur résultante (H2) qui est mesurée d'une base de la plaque de montage de moteur (6) différente à une ligne médiane (30) d'un arbre de moteur du moteur (4) différent et qui est égale à la hauteur spécifique (H3) différente.

8. Ensemble ventilateur à entraînement direct selon la revendication 7, dans lequel le moteur (4) et la plaque de montage de moteur (6) appariée ont une relation inverse de taille.
